# EUROPEAN PATENT SPECIFICATION

(11) **EP 1 034 581 B1**
(45) Date of publication and mention of the grant of the patent: **06.02.2002**
(21) Application number: 98961238.7
(22) Date of filing: 30.11.1998
(51) Int. Cl.: H01R 4/68, H02G 15/34

(54) **A POWER INDUCTION DEVICE**
ENERGIEINDUKTIONSVORRICHTUNG
DISPOSITIF D'INDUCTION ELECTRIQUE

(30) Priority: 28.11.1997 GB 9725321
(43) Date of publication of application: 13.09.2000
(73) Proprietor: ABB AB, 721 83 Västeras (SE)
(72) Inventor: CARSTENSEN, Peter, S-141 42 Huddinge (SE); WINKLER, Dag, S-431 68 Mölndal (SE); SASSE, Christian, S-724 64 Västeras (SE); LEIJON, Mats, S-723 35 Västeras (SE)
(74) Representative: Newby, Martin John
(86) International application number: EP9807742
(87) International publication number: WO9928994

(56) References cited:
- DE-A- 3 008 818
- FR-A- 2 251 938
- US-A- 2 256 897
- US-A- 4 084 307
- US-A- 4 785 138
- KOSAKI M ET AL: "DEVELOPMENT OF EXTRUDED POLYMER INSULATED SUPERCONDUCTING CABLE" CRYOGENICS, vol. 32, no. 10, 1 January 1992, pages 885-894, XP000319818

## Description

### Technical Field

This invention relates to a power induction device including at least one cable joint assembly for connecting together two high voltage cables, e.g. operating at up to 800 kV or higher, at least one of which cables is cooled in use to a low temperature to improve its electrical conductivity. In particular, but not exclusively, the invention relates to a power induction device in which the at least one cable joint assembly connects together a superconducting power cable, preferably a so-called high-temperature (high-T_{c}) superconducting (HTS) power cable, to another HTS cable or any other type of high voltage cable. The power induction device may comprise, for example, a fault current limiter, a transformer, motor, generator or magnetic energy storage device, such as a SMES device. The invention also relates to a method of joining together two high voltage or power cables in a power induction device, at least one of which cables is cooled in use to a lower temperature to improve its electrical conductivity.

### State of the Art

In a power induction device, the joining together of high voltage power cables having electrical conductors which operate at normal room or ambient temperatures is well known. In such a known cable joint, it is conventional for the electrical insulation to be stripped from end regions of the cables to be joined to reveal the underlying electrical conductors. These electrical conductors are then joined, e.g. soldered, welded or mechanically joined, together and the joined together conductors are surrounded at the joint by polymeric material. An example of such a joint in which the polymeric material comprises a cross-linked polymer tape is disclosed in US-A-4,084,307. However in other known joints the polymeric material may be in the form of a prefabricated joint, an elastomer taped joint which is self-amalgamating or an extruded or taped layer of the polymeric material which is cross-linked in situ.

The joining together in a power induction device of two cooled, e.g. superconducting, cables is more complex than the joining together of conventional, non-cooled cables since it requires the joining together of conduits for cryogenic cooling fluids, the joining together of conducting means, e.g. superconducting tapes or threads, and the provision of electrical insulation around the joint. Conventionally it has been necessary to ensure that the electrical insulation surrounding the joint is not subjected to a large thermal gradient which may result in mechanical stress and degradation of the insulation. In practice conventional electrical insulation is thermally insulated externally so that it is close to the temperature of the inner cooled conductors and/or is thermally insulated inwardly between itself and the inner conductors so that it is not cooled close to cryogenic temperatures.

### Summary of the Invention

An aim of the present invention is to provide in a power induction device an improved cable joint assembly for joining together two high voltage cables, at least one of which is cooled in use to a low temperature to improve its electrical conductivity, and an improved method of joining together two such cables in a power induction device.

According to one aspect of the present invention there is provided a power induction device including at least one cable joint assembly comprising:
a first cable having inner first conducting means and surrounding outer first electrical insulation, the first conducting means including first conductor means;
a second cable having inner second conducting means and surrounding outer second electrical insulation;
one end of the first conducting means being joined at a joint to one end of the second conducting means, the said outer electrical insulation of each cable not surrounding an end portion of its associated inner conducting means adjacent the said one end of the latter; and
polymeric electrically insulating means surrounding the said joint and the said end portions of the first and second conducting means;
characterised in that
said first conducting means further includes first cooling means for cooling the first conductor means to improve the electrical conductivity of the first conductor means, and in that said first electrical insulation (4) comprises a first inner layer of semiconducting material electrically connected to the first conductor means, a first outer layer of semiconducting material connected to a controlled electric potential, e.g. earth potential, along its length, and a first intermediate layer of solid electrically insulating material between said semiconducting first inner and outer layers

In this specification the term "semiconducting material" means a substance which has a considerably lower conductivity than an electric conductor but which does not have such a low conductivity that it is an electric insulator. Suitably, but not exclusively, the semiconducting material will have a resistivity of from 1 to 10⁵ ohm·cm, preferably from 10 to 500 ohm·cm and most preferably from 10 to 100 ohm·cm, typically about 20 ohm·cm.

Conveniently the polymeric electrically insulating means is arranged to surround the or each joint assembly in the power induction device and the said end portions of the first and second conducting means without any intervening thermal insulation. Thus in such a design the polymeric electrically insulating means will operate in use at or close to cryogenic temperatures.

A layer of semiconducting material may be provided on the inside and/or outside of the polymeric electrically insulating means.

The polymeric electrically insulating means may comprise a prefabricated polymeric sleeve, a polymeric extrusion extruded around the joint or a polymeric tape wrapped around the joint. In the case of polymeric tape or extruded layer, the material may be cross-linked or may contain a cross-linking agent which is cross-linked by heat and pressure after its application around the joint.

Examples of polymeric materials for the polymeric electrically insulating means comprise low or high density polyethylene (LDPE or HDPE), polypropylene (PP), polybutylene (PB), polymethylpentene (PMP), ethylene (ethyl) acrylate polymer, cross-linked (or cross-linkable) materials, such as cross-linked polyethylene (XLPE), or rubber insulation, such as ethylene propylene rubber (EPR) or silicone rubber.

Preferably the first conductor means comprises first superconducting means and the first cooling means, in use, cools the first superconducting means to superconducting temperatures.

Preferably the second conducting means comprises second conductor means and second cooling means for cooling the second conductor means to improve the electrical conductivity of the second conductor means. Conveniently, the second conductor means comprises second superconducting means and the second cooling means, in use, cool the second superconducting means to superconducting temperatures.

Conveniently the or each of said cooling means comprises an inner tube of metal or metal alloy, preferably of high electrical resistivity, through which cryogenic cooling fluid, e.g. liquid nitrogen, is passed. In the case where the or each conductor means comprises superconducting means, the superconducting means comprises elongate superconducting material, preferably HTS material, e.g. in tape or thread form, helically wound around its associated inner tube. If both the first and second conductor means comprise superconducting means, the inner tubes are suitably mechanically joined, e.g. welded, together at the joint and electrical connection is made between end regions of the elongate superconducting materials of the first and second superconducting means. The helically wound HTS material is cooled to below the critical temperature T_{c} of the HTS by the cooling fluid passing through the inner tubes.

There are many different types of HTS material which are normally ceramic materials. A typical example of elongate HTS material in thread or tape form comprises silver-sheathed BSCCO-2212 or BSCCO-2223 (where the numerals indicate the number of atoms of each element in the [Bi, Pb]₂ Sr₂ Ca₂ Cu₃ Ox molecule). BSCCO threads or tapes are made by encasing fine filaments of the oxide superconductor in a silver or silver oxide matrix by a powder-in-tube (PIT) draw, roll, sinter and roll process. Alternatively the threads or tapes may be formed by a surface coating process. In either case the oxide is melted and resolidified as a final process step. Other HTS threads or tapes, such as TiBaCaCuO (TBCCO-1223) and YBaCuO (YBCO-123) have been made by various surface coating or surface deposition techniques. Two HTS threads, each having an outer electrically conductive, e.g. metallic (silver), layer, can be joined together by joining the conductive layers of the two threads. For example end portions of two such HTS threads can be overlapped and the silver outer layers can be soldered together. In this case, the silver layers act as "bridges" connecting the HTS material together.

Preferably the second electrical insulation has second inner, outer and intermediate layers similar to the first inner layer, first outer layer and first intermediate layer of the first electrical insulation.

The or each of the intermediate layers preferably comprises polymeric material such as, for example, low density polyethylene (LDPE), high density polyethylene (HDPE), polypropylene (PP), cross-linked materials such as cross-linked polyethylene (XLPE) or rubber insulation such as ethylene propylene rubber (EPR) or silicone rubber. The semiconducting layers of the first electrical insulation or on the inner and/or outer layers of the polymeric electrically insulating means are formed of similar polymeric materials but with highly electrically conductive particles, e.g. of carbon black or metal, embedded therein. Typical examples of materials for the insulating and semiconducting layers are disclosed in US-A-4,785,138.

According to another aspect of the present invention there is provided a method of joining together in a power induction device a first cable having inner first conducting means and surrounding outer first electrical insulation, the first conducting means including first conductor means, and a second cable having inner second conducting means and surrounding outer second electrical insulation, the method comprising removing the electrical insulation from an end portion of each cable to reveal the underlying conducting means joining together the said end portions of the first and second conducting means so that the conducting means are joined together end to end at a joint, and surrounding the joint and said end portions of the inner first and second conducting means with polymeric electrically insulating means, characterised in that said first conducting means further includes first cooling means for cooling the first conductor means to improve the electrical conductivity of the first conductor means, and in that the first electrical insulation comprises a first inner layer of semiconducting material electrically connected to the first conductor means, a first outer layer of semiconducting material connected to a controlled electric potential, e.g. earth potential, along its length, and a first intermediate layer of solid electrically insulating material between said semiconducting first inner and outer layers.

### Brief Description of the Drawings

Embodiments of the invention will now be described, by way of example only, with particular reference to the accompanying drawing, in which:
Figure 1 is a schematic sectional view of a cable joint assembly of a power induction device according to the present invention;
Figure 2 is a schematic partial sectional view, on an enlarged scale, of a high voltage power cable of the cable joint assembly;
Figure 3 is a schematic sectional view illustrating the joining together of two overlapping super-conducting threads of a joint assembly of a power induction device;
Figure 4 is a schematic view of a joint assembly for connecting together two power cables of a power induction device; and
Figure 5 is a detail, on an enlarged scale of part of a joint of the joint assembly of Figure 4.

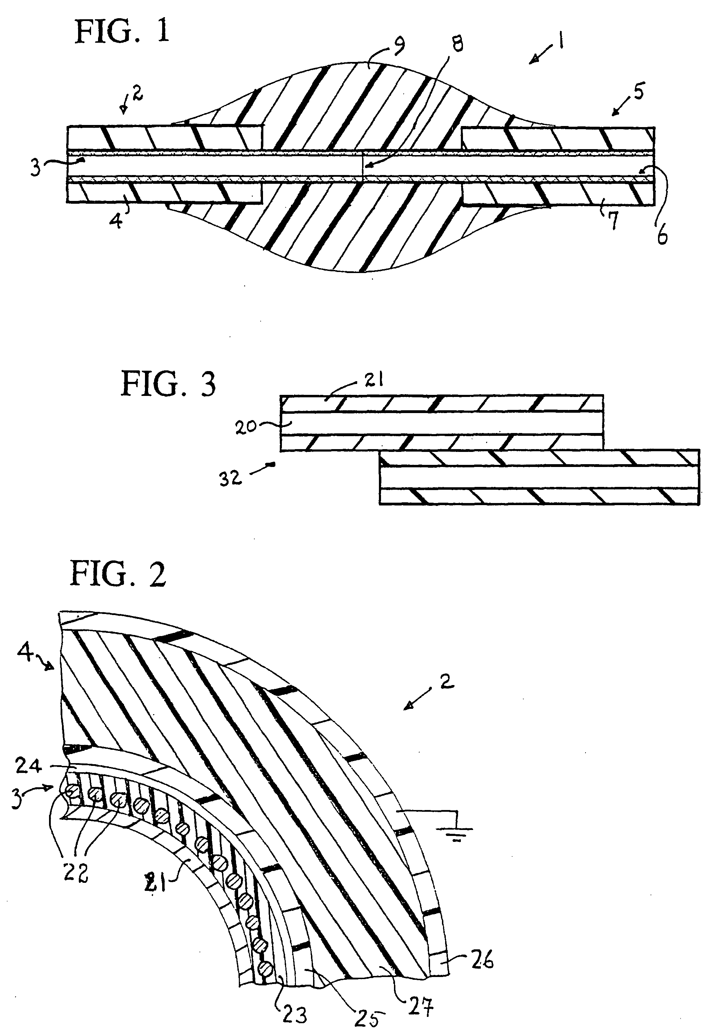

Figure 1 shows a joint assembly, generally designated by the reference numeral 1, of a power induction device. The joint assembly comprises a first superconducting cable 2 having elongate inner superconducting means 3 and outer electrical insulation 4, a second superconducting cable 5 having elongate inner superconducting means 6 and outer electrical insulation 7, the superconducting means 3 and 6 being joined end to end at joint 8, and polymeric electrical insulation 9 surrounding the joint 8. End portions of the electrical insulation 4 and 7 have been removed to reveal end portions of the superconducting means 3, 6 on either side of the joint 8. The first superconducting cable 2 may, for example, form an inductive winding of the induction device and the second superconducting cable 5 may comprise an input or output connection to the induction device. Alternatively, for example, the joined cables may comprise parts of the same winding of the power induction device.

Figure 2 shows one of the superconducting cables 2 (the other cable 5 being of substantially similar design) of the joint assembly 1 shown in Figure 1. The elongate inner superconducting means 3 comprises an inner metal, e.g. copper or highly resistive metal or alloy, support tube 21 and an HTS wire 22 wound helically around the tube 21 and embedded in a layer 23 of semiconducting, e.g. plastics, material. The electrical insulation 4 is arranged outwardly of, at a small radial spacing 24 from, the layer 23. This electrical insulation 4 is substantially void-free and comprises an inner semiconducting layer 25, an outer semiconducting layer 26 and, sandwiched between these semiconducting layers, an insulating layer 27. The layers 25-27 are formed of solid material and preferably comprise thermoplastics materials connected to each other at their interfaces. Conveniently these thermoplastics materials have similar coefficients of thermal expansion (α) and are preferably extruded together around the inner superconducting means 3. Preferably the layers 25-27 are extruded together to provide a monolithic structure so as to minimise the risk of cavities and pores at the interfaces of the electrical insulation. The presence of such pores and cavities in the insulation and at its interfaces is undesirable since it gives rise to corona discharge in the electrical insulation at high electric field strengths.

The outer semiconducting layer 26 is connected along its length, e.g. at spaced apart regions along its length, to a controlled potential. In most practical applications this controlled potential will be earth or ground potential. The specific spacing apart of spaced apart adjacent earthing points is dependent on the resistivity of the layer 26.

The semiconducting layer 26 acts as a static shield and as an earthed outer layer which ensures that the electric field of the superconducting cable is retained within the solid insulation between the semiconducting layers 25 and 26. Losses caused by induced voltages in the layer 26 are reduced by increasing the resistance of the layer 26. However, since the layer 26 must be at least of a certain minimum thickness, e.g. no less than 0.8 mm, the resistance can only be increased by selecting the material of the layer to have a relatively high volume resistivity. The resistivity cannot be increased too much, however, else the voltage of the layer 26 mid-way between two adjacent earthing points will be too high with the associated risk of corona discharges occurring.

The radial spacing 24 provides an expansion/contraction gap to compensate for the differences in the thermal coefficients of expansion (α) between the electrical insulation 4 and the inner superconducting means 3 (including the metal tube 21). The spacing 24 may be a void space or may incorporate a foamed, highly compressible material to absorb any relative movement between the superconductor and insulation system. The foamed material, if provided, may be semiconductive to ensure electrical contact between the layers 23 and 25. Additionally or alternatively, metal wires may be provided for ensuring the necessary electrical contact between the layers 23 and 25.

The HTS wire 22 is cooled to cryogenic temperatures by the passage of a cooling fluid, e.g. liquid nitrogen, through the tube 21.

By way of example only the semiconducting material of each of the layers 23, 25 and 26 may comprise, for example, a base polymer, such as ethylene-propylene copolymer rubber (EPRM) or ethylene-propylene-diene monomer rubber (EPDM), and highly electrically conductive particles, e.g. particles of carbon black embedded in the base polymer. The volume resistivity of these semiconducting layers may be adjusted as required by varying the type and proportion of carbon black added to the base polymer. The following gives an example of the way in which volume resistivity can be varied using different types and quantities of carbon black.

| Base Polymer | Carbon Black Type | Carbon Black Quantity (%) | Volume Resistivity Ω·cm |
|---|---|---|---|
| Ethylene vinyl acetate copolymer/nitrite rubber | EC carbon black | ~15 | 350-400 |
| -"- | P-carbon black | ~37 | 70-10 |
| -"- | Extra conducting carbon black, type I | ~35 | 40-50 |
| - "- | Extra conducting black, type II | ~33 | 30-60 |
| Butyl grafted polyethylene | -"- | ~25 | 7-10 |
| Ethylene butyl acrylate copolymer | Acetylene carbon black | ~35 | 40-50 |
| -"- | P carbon black | ~38 | 5-10 |
| Ethylene propene rubber | Extra conducting carbon black | -35 | 200-400 |

The HTS wire 22 may suitably comprise a core 20 of an alloy of superconducting material (see Figure 3) sheathed in an electrically conductive outer layer 21, e.g. of silver or silver alloy. Typical of such an HTS wire are silver-sheathed BSCCO-2212 or BSCCO-2223. In order to join together two such HTS wires, the ends of the wires may be overlapped as shown in Figure 3 and the conductive outer layers 21 soldered or otherwise joined together. The length of the overlap should be sufficient to provide a good electrical contact of the outer layers. Since the inner cores 20 are in electrical contact with their conductive outer layers 21, the latter act as "bridges" for electrically connecting the inner cores together.

The polymeric electrical insulation 9 is shown schematically in Figure 1. The polymeric insulation may be in the form of a prefabricated joint or sleeve, an elastomer taped joint which is self-amalgamating or an extruded or taped layer of the polymeric material which is cross-linked in situ. Examples of polymeric materials for the polymeric electrically insulating means comprise low density polyethylene (LDPE), high density polyethylene (HDPE), polypropylene (PP), cross-linked (or cross-linkable) materials, such as cross-linked polyethylene (XLPE), or rubber insulation, such as ethylene propylene rubber (EPR) or silicone rubber. In the embodiment described, no thermal insulation and no cryostat is positioned between the insulation 9 and the inner superconducting means. A layer (not shown) of semiconducting material may be provided inwardly and/or outwardly of the insulation 9, although it may not be necessary for the layer(s) to extend over the entire axial extent of the inner/outer surface(s) of the insulation 9. If a semiconducting inner layer is provided it will make electrical contact with the superconducting means 6. If a semiconducting outer layer is provided, it will be at a controlled, e.g. earth, potential along its length. The semiconducting material may be the same as that used for the layers 23, 25 and 26.

Although the cables 2 and 5 are shown as being of generally similar design, the thickness of the outer electrical insulation 4 may be different to the thickness of the outer electrical insulation 7. Thus, for example, if the joined together cables 2 and 5 form at least part of a transformer winding, with the cable 2 being at a higher operating voltage, in use, than the cable 5, then the insulation 4 may be thicker than the insulation 7. By providing each winding with joined together power cables of different diameters, and by intermixing different windings, it is possible to optimise the space occupied by the windings.

In joining together two cables 2 and 5, the end portions of the cables to be joined are stripped of the electrical insulation 4 and 7, respectively. Then the inner metal support tubes are welded together and the HTS wires are joined together. Finally the polymeric electrical insulation 9 is applied around the joint 8 and the uncovered end portions of the support tubes.

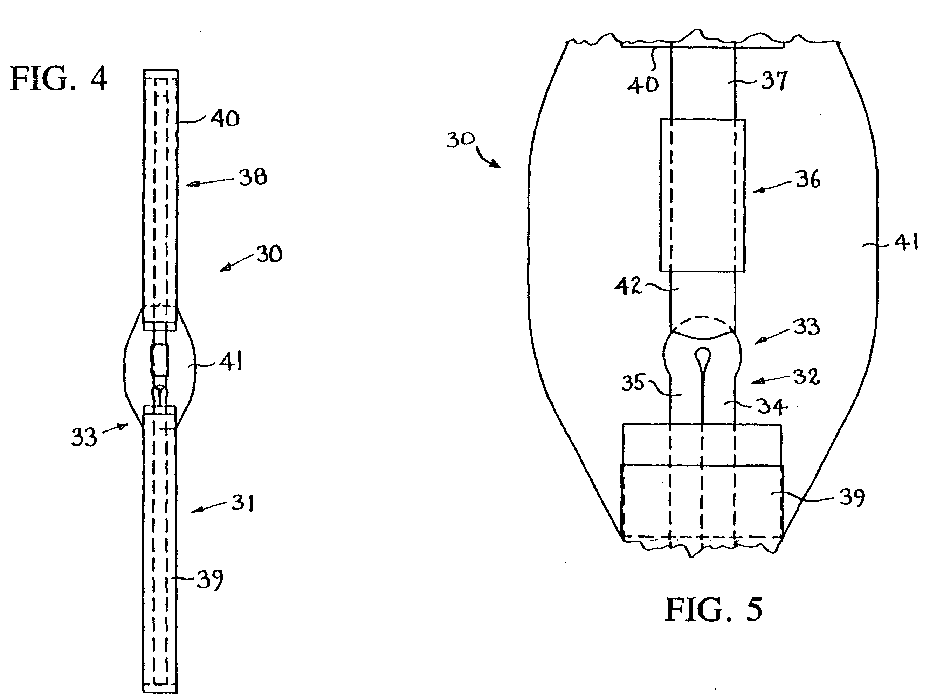

Figures 4 and 5 show in a power induction device an alternative joint assembly for connecting together a superconducting cable 31 and an earthed non-superconducting cable 38 electrically insulated by solid electrically insulating material 40. The superconducting cable 31 has a central tube 32 having a return bend at one end 33 of the cable to form a generally U-shaped tube having coolant supply and return ducts 34 and 35 in communication with each other. Superconducting means, in the form of elongate superconducting wire or tape having conductive strands 42, is wound around the central tube 32 with the conductive strands 42 being joined, e.g. soldered, at joint 36 to the current conductor(s) 37 of the cable 38.

The superconducting wire or tape wound around the central tube 32 is electrically insulated by typically void-free, solid insulating material 39 comprising an inner layer of semiconducting material electrically connected to the superconducting means, an outer layer of semiconducting material connected to a controlled electric potential, preferably earth potential, along its length and an intermediate layer of electrically insulating material. Conveniently these layers of the electrical insulation are of similar material, e.g. polymeric material, and are formed in a similar manner to the layers of the electric insulation 7 described with reference to the Figure 2. The electrical insulation 40 may be similar to the insulation 39, having inner and outer layers of semiconducting material and an intermediate layer of insulating material. Conductors of the cable 38 are connected to the inner semiconducting layer and the outer semiconducting layer is at a controlled, e.g. earth, potential along its length.

The joint 36 is surrounded by polymeric electrical insulation 41. The insulation 41 surrounds the soldered together superconducting strands 42 and current conductor(s) 37 and overlaps both the insulating material 39 and the insulating material 40.

The central tube may comprise a single tube (not shown) divided by an internal partition to provide supply and return ducts for the cryogenic fluid which are in communication with each other at the end 33. The cooling efficiency can be slightly improved by constructing the support tube and/or its inner partition as a helix so that the surrounding superconducting wire or tape is cooled along a helical path. Alternatively the support tube could be designed as a pair of concentric tubes, the inner tube serving as a return duct for the cryogenic fluid, the superconducting wire or tape being wound on the outside of the outer tube and the annular gap between the inner and outer tubes providing a supply duct for the cryogenic fluid.

The invention is not limited to a power induction device having at least one joined superconducting cable or cables of the type disclosed in Figure 2. Indeed the or each joint assembly of a power induction device according to the invention is intended to cover the use of polymeric electrical insulation which is able to operate at or close to cryogenic temperatures.

Although the present invention is primarily directed to power induction devices having joints for high voltage power cables at least one of which has conducting means with superconducting properties which are cooled to superconducting temperatures in use, the invention is also intended to embrace power induction devices having power cable joints in which at least one of the high voltage power cables has conducting means having improved electrical conductivity at a low operating temperature, up to, but preferably no more than, 200 K, but which may not possess superconducting properties at least at the intended low operating temperature. At these higher cryogenic temperatures, liquid carbon dioxide can be used for cooling the conducting means.

The electrical insulation used in a joint of a power induction device according to the invention is intended to be able to handle very high voltages and the consequent electric and thermal loads which may arise at these voltages. By way of example, a power induction device according to the invention may comprise a power transformer having a rated power of from a few hundred kVA up to more than 1000 MVA and with a rated voltage ranging from 3-4 kV up to very high transmission voltages of 400-800 kV. At high operating voltages, partial discharges, or PD, constitute a serious problem for known insulation systems of power induction devices. If cavities or pores are present in the insulation, internal corona discharge may arise whereby the insulating material is gradually degraded eventually leading to breakdown of the insulation. The electric load on the electrical insulation of a cable of a power induction device according to the present invention is reduced by ensuring that the inner layer of the insulation is at substantially the same electric potential as the inner conducting means and the outer layer of the insulation is at a controlled, e.g. earth, potential. Thus the electric field in the intermediate layer of insulating material between the inner and outer layers is distributed substantially uniformly over the thickness of the intermediate layer. Furthermore, by having materials with similar thermal properties and with few defects in the layers of the insulating material, the possibility of PD is reduced at a given operating voltages. A joint of a power induction device can thus be designed to withstand very high operating voltages, typically up to 800 kV or higher.

Power induction devices according to the invention may comprise, for example, motors, generator, transformers, energy storage devices, such as SMES devices, or fault current limiters.

Although it is preferred that the electrical insulation should be extruded in position, it is possible to build up an electrical insulation system from tightly wound, overlapping layers of film or sheet-like material. Both the semiconducting layers and the electrically insulating layer can be formed in this manner. An insulation system can be made of an all-synthetic film with inner and outer semiconducting layers or portions made of polymeric thin film of, for example, PP, PET, LDPE or HDPE with embedded conducting particles, such as carbon black or metallic particles and with an insulating layer or portion between the semiconducting layers or portions.

For the lapped concept a sufficiently thin film will have butt gaps smaller than the so-called Paschen minima, thus rendering liquid impregnation unnecessary. A dry, wound multilayer thin film insulation has also good thermal properties and can be combined with a superconducting pipe as an electric conductor and have coolant, such as liquid nitrogen, pumped through the pipe.

Another example of an electrical insulation system is similar to a conventional cellulose based cable, where a thin cellulose based or synthetic paper or non-woven material is lap wound around a conductor. In this case the semiconducting layers, on either side of an insulating layer, can be made of cellulose paper or non-woven material made from fibres of insulating material and with conducting particles embedded. The insulating layer can be made from the same base material or another material can be used.

Another example of an insulation system is obtained by combining film and fibrous insulating material, either as a laminate or as co-lapped. An example of this insulation system is the commercially available so-called paper polypropylene laminate, PPLP, but several other combinations of film and fibrous parts are possible. In these systems various impregnations such as mineral oil or liquid nitrogen can be used.

## Claims

1. A power induction device including at least one cable joint assembly (1) comprising:
- a first cable (2) having inner first conducting means (3) and surrounding outer first electrical insulation (4), the first conducting means (3) including first conductor means (22);
- a second cable (5) having inner second conducting means (6) and surrounding outer second electrical insulation (7);
- one end of the first conducting means (3) being joined at a joint (8) to one end of the second conducting means (6), the said outer electrical insulation (4, 7) of each cable not surrounding an end portion of its associated inner conducting means adjacent the said one end of the latter; and
- polymeric electrically insulating means (9) surrounding the said joint (8) and the said end portions of the first and second conducting means (3, 6),
**characterised in that**
said first conducting means further includes first cooling means (21) for cooling the first conductor means to improve the electrical conductivity of the first conductor means (22), and **in that** said first electrical insulation (4) comprises a first inner layer of semiconducting material electrically connected to the first conductor means, a first outer layer of semiconducting material connected to a controlled electric potential, e.g. earth potential, along its length, and a first intermediate layer of solid electrically insulating material between said semiconducting first inner and outer layers.

2. A power induction device according to claim 1, **characterised in that** said polymeric electrically insulating means (9) surrounds the said joint (8) and the said end portions of the first and second conducting means (3, 6) without any intervening thermal insulation.

3. A power induction device according to claim 1 or 2, **characterised in that** said polymeric electrically insulating means (9) comprises a prefabricated polymeric sleeve.

4. A power induction device according to claim 1 or 2, **characterised in that** said polymeric electrically insulating means (9) comprises a polymeric extrusion extruded around the joint (8).

5. A power induction device according to claim 1 or 2, **characterised in that** said polymeric electrically insulating means (9) comprises a polymeric tape wrapped around the joint.

6. A power induction device according to claim 5, **characterised in that** said polymeric tape is cross-linked.

7. A power induction device according to any one of the preceding claims, **characterised in that** inwardly of said polymeric insulating means (9) there is a layer of semiconducting material.

8. A power induction device according to any one of the preceding claims, **characterised in that** outwardly of said polymeric insulating means (9) there is a layer of semiconducting material.

9. A power induction device according to any one of the preceding claims, **characterised in that** said polymeric electrically insulating means comprises low or high density polyethylene (LDPE or HDPE), polybutylene (PB), polymethylpentene (PMP), ethylene (ethyl) acrylate polymer, cross-linked materials or rubber insulation.

10. A power induction device according to claim 9, **characterised in that** said cross-linked materials comprise cross-linked polyethylene (XLPE).

11. A power induction device according to claim 9, **characterised in that** said rubber insulation comprises ethylene propylene rubber (EPR) or silicone rubber.

12. A power induction device according to any one of the preceding claims, **characterised in that** the first conductor means comprises first superconducting means and the first cooling means, in use, cools the first superconducting means to superconducting temperatures.

13. A power induction device according to any one of the preceding claims, **characterised in that** the second conducting means comprises second conductor means and second cooling means for cooling the second conductor means to improve the electrical conductivity of the second conductor means.

14. A power induction device according to claim 13, **characterised in that** the second conductor means comprises second superconducting means and the second cooling means, in use, cools the second superconducting means to superconducting temperatures.

15. A power induction device according to any one of the preceding claims, **characterised in that** the or each of said cooling means comprises an inner tube through which cryogenic cooling fluid, e.g. liquid nitrogen, is passed.

16. A power induction device according to claim 15 when dependent on claim 12 or 14, **characterised in that** the or each of said superconducting means comprises elongate superconducting material helically wound around its associated inner tube.

17. A power induction device according to claim 16 when dependent on claim 14, **characterised in that** the two inner tubes are mechanically joined, e.g. welded, together at the joint.

18. A power induction device according to any one of the preceding claims, **characterised in that** the second electrical insulation (7) comprises a second inner layer of semiconducting material electrically connected to the second conducting means, a second outer layer of semiconducting material connected to a controlled electric potential, e.g. earth potential, along its length, and a second intermediate layer of solid electrically insulating material between said semiconducting second inner and outer layers.

19. A power induction device according to any one of the preceding claims, **characterised in that** the said semiconducting material has a resistivity of from 1 to 10⁵ ohm-cm, preferably from 10 to 500 ohm-cm and most preferably from 50 to 100 ohm-cm.

20. A power induction device according to any one of the preceding claims, **characterised in that** the or each of said intermediate layers comprises polymeric material.

21. A power induction device according to any one of the preceding claims, **characterised in that** the or each semiconducting layer is formed of polymeric material with highly electrically conductive particles, e.g. carbon black or metallic particles, embedded therein.

22. A power induction device according to claim 20 or 21, **characterised in that** the said polymeric material comprises low density polyethylene (LDPE), high density polyethylene (HDPE), polypropylene (PP), cross-linked materials, for example cross-linked polyethylene (XLPE), or rubber insulation such as ethylene propylene rubber (EPR) or silicone rubber.

23. A power induction device according to any one of the preceding claims, **characterised in that** it is designed for high voltage, suitably in excess of 10 kV, in particular in excess of 36 kV, and preferably more than 72.5 kV up to very high transmission voltages, such as 400 kV to 800 kV or higher.

24. A power induction device according to any one of the preceding claims, **characterised in that** it is designed for a power range in excess of 0.5 MVA, preferably in excess of 30 MVA and up to 1000 MVA.

25. A method of joining together in a power induction device a first cable (2) having inner first conducting means (3) and surrounding outer first electrical insulation (4), the first conducting means including first conductor means (22), and a second cable (5) having inner second conducting means (6) and surrounding outer second electrical insulation (7), the method comprising removing the electrical insulation from an end portion of each cable (2, 5) to reveal the underlying conducting means (3, 6), joining together the said end portions of the first and second conducting means (3, 6) so that the conducting means are joined together end to end at a joint.(8), and surrounding the joint and said end portions of the inner first and second conducting means (3, 6) with polymeric electrically insulating means (9), **characterised in that** said first conducting means further includes first cooling means (21) for cooling the first conductor means to improve the electrical conductivity of the first conductor means (22), and **in that** the first electrical insulation (4) comprises a first inner layer of semiconducting material electrically connected to the first conductor means, a first outer layer of semiconducting material connected to a controlled electric potential, e.g. earth potential, along its length, and a first intermediate layer of solid electrically insulating material between said semiconducting first inner and outer layers.

26. A method according to claim 25, **characterised in that** said polymeric electrically insulating means (9) is applied as a prefabricated sleeve surrounding the joint and said end portions of the first and second conducting means.

27. A method according to claim 25, **characterised in that** said polymeric electrically insulating means (9) is extruded around the joint and said end portions of the first and second conducting means.

28. A method according to claim 25, **characterised in that** said polymeric electrically insulating means (9) is applied as a polymeric tape around the joint and said end portions of the first and second conducting means.

29. A method according to claim 28, **characterised in that** the polymeric tape is cross-linked.

30. A method according to claim 28, **characterised in that** the polymeric tape contains a cross-linking agent which is cross-linked by the application of heat and pressure after the tape has been wrapped around the joint and said end portions of the first and second conducting means.

31. A method according to any one of claims 25 to 30, **characterised in that** said polymeric insulating means (9) has an inner layer of semiconducting material.

32. A method according to any one of claims 25 to 31, **characterised in that** said polymeric insulating means (9) has an outer layer of semiconducting material.

33. A method according to any one of claims 25 to 32, **characterised in that** said first conductor means comprises superconducting means.

34. A method according to any one of claims 25 to 33, **characterised in that** said second conducting means comprises second conductor means comprising superconducting means and second cooling means for cooling the second conductor means to superconducting temperatures.

35. A method according to claim 34 when dependent on claim 33, **characterised in that** each cooling means comprises an inner tube through which, in use cryogenic cooling fluid is passed, **in that** each superconducting means comprises elongate superconducting material helically wound around its associated inner tube, and **in that** the said inner tubes are joined together end to end.

36. A method according to claim 35, **characterised in that** the said inner tubes are joined together end to end by welding.

37. A method according to claim 35 or 36, **characterised in that** said superconducting materials comprise oxide superconducting means sheathed in a metallic, e.g. silver or silver alloy, sheath and **in that** the metallic sheaths are joined together, e.g. by soldering.

38. A method according to any one of claims 25 to 37, **characterised in that** the power induction device is designed for high voltage, suitably in excess of 10 kV, in particular in excess of 36 kV, and preferably more than 72.5 kV up to very high transmission voltages, such as 400 kV to 800 kV or higher.

39. A method according to any one of claims 25 to 38, **characterised in that** the power induction device is designed for a power range in excess of 0.5 MVA, preferably in excess of 30 MVA and up to 1000 MVA.

## Patentansprüche

1. Leistungsinduktionseinrichtung mit mindestens einer Kabelverbindungsbaugruppe (1), die folgendes umfaßt:
- ein erstes Kabel (2) mit einem inneren ersten leitenden Mittel (3) und einer umgebenden äußeren ersten elektrischen Isolation (4), wobei das erste leitende Mittel (3) ein erstes Leitermittel (22) enthält;
- ein zweites Kabel (5) mit einem inneren zweiten leitenden Mittel (6) und einer umgebenden äußeren zweiten elektrischen Isolation (7);
- wobei ein Ende des ersten leitenden Mittels (3) an einer Verbindung (8) mit einem Ende des zweiten leitenden Mittels (6) verbunden ist, wobei die äußere elektrische Isolation (4, 7) jedes Kabels einen Endteil seines zugeordneten inneren leitenden Mittels neben dem einen Ende des letzteren nicht umgibt; und
- ein polymerisch elektrisch isolierendes Mittel (9), das die Verbindung (8) und die Endteile des ersten und des zweiten leitenden Mittels (3, 6) umgibt,
**dadurch gekennzeichnet, daß** das erste leitende Mittel weiterhin ein erstes Kühlmittel (21) zum Kühlen des ersten Leitermittels zur Verbesserung der elektrischen Leitfähigkeit des ersten Leitermittels (22) enthält und daß die erste elektrische Isolation (4) eine erste Innenschicht aus halbleitendem Material, die elektrisch mit dem ersten Leitermittel verbunden ist, eine erste Außenschicht aus halbleitendem Material, die über ihre Länge hinweg mit einem gesteuerten elektrischen Potential, zum Beispiel Erdpotential, verbunden ist, und eine erste Zwischenschicht aus massivem elektrisch isolierendem Material zwischen der halbleitenden ersten Innenschicht und Außenschicht enthält.

2. Leistungsinduktionseinrichtung nach Anspruch 1, **dadurch gekennzeichnet, daß** das polymerische elektrisch isolierende Mittel (9) die Verbindung (8) und die Endteile des ersten und des zweiten leitenden Mittels (3, 6) ohne jegliche eingefügte thermische Isolation umgibt.

3. Leistungsinduktionseinrichtung nach Anspruch 1 oder 2, **dadurch gekennzeichnet, daß** das polymerische elektrisch isolierende Mittel (9) eine vorgefertigte polymerische Hülse umfaßt.

4. Leistungsinduktionseinrichtung nach Anspruch 1 oder 2, **dadurch gekennzeichnet, daß** das polymerische elektrisch isolierende Mittel (9) ein um die Verbindung (8) herum extrudiertes polymerisches Strangpreßteil umfaßt.

5. Leistungsinduktionseinrichtung nach Anspruch 1 oder 2, **dadurch gekennzeichnet, daß** das polymerische elektrisch isolierende Mittel (9) ein um die Verbindung herum gewickeltes polymerisches Band umfaßt.

6. Leistungsinduktionseinrichtung nach Anspruch 5, **dadurch gekennzeichnet, daß** das polymere Band vernetzt ist.

7. Leistungsinduktionseinrichtung nach einem der vorhergehenden Ansprüche, **dadurch gekennzeichnet, daß** innerhalb des polymerischen isolierenden Mittels (9) eine Schicht aus halbleitendem Material angeordnet ist.

8. Leistungsinduktionseinrichtung nach einem der vorhergehenden Ansprüche, **dadurch gekennzeichnet, daß** außerhalb des polymerischen isolierenden Mittels (9) eine Schicht aus halbleitendem Material angeordnet ist.

9. Leistungsinduktionseinrichtung nach einem der vorhergehenden Ansprüche, **dadurch gekennzeichnet, daß** das polymerische elektrisch isolierende Mittel Polyethylen niedriger oder hoher Dichte (PE-LD oder PE-HD), Polybutylen (PB), Polymethylpenten (PMP), Ethylen-(Ethyl-)acrylatpolymer, vernetzte Materialien oder eine Kautschukisolation umfaßt.

10. Leistungsinduktionseinrichtung nach Anspruch 9, **dadurch gekennzeichnet, daß** die vernetzten Materialien vernetztes Polyethylen (XLPE) umfassen.

11. Leistungsinduktionseinrichtung nach Anspruch 9, **dadurch gekennzeichnet, daß** die Kautschukisolation Ethylenpropylen-Kautschuk (EPR) oder Siliziumkautschuk umfaßt.

12. Leistungsinduktionseinrichtung nach einem der vorhergehenden Ansprüche, **dadurch gekennzeichnet, daß** das erste Leitermittel ein erstes supraleitendes Mittel umfaßt und das erste Kühlmittel bei Gebrauch das erste supraleitende Mittel auf supraleitende Temperaturen kühlt.

13. Leistungsinduktionseinrichtung nach einem der vorhergehenden Ansprüche, **dadurch gekennzeichnet, daß** das zweite leitende Mittel ein zweites Leitermittel und ein zweites Kühlmittel zum Kühlen des zweiten Leitermittels zum Verbessern der elektrischen Leitfähigkeit des zweiten Leitermittels umfaßt.

14. Leistungsinduktionseinrichtung nach Anspruch 13, **dadurch gekennzeichnet, daß** das zweite Leitermittel ein zweites supraleitendes Mittel umfaßt und das zweite Kühlmittel bei Gebrauch das zweite supraleitende Mittel auf supraleitende Temperaturen kühlt.

15. Leistungsinduktionseinrichtung nach einem der vorhergehenden Ansprüche, **dadurch gekennzeichnet, daß** das oder jedes Kühlmittel ein Innenrohr umfaßt, durch das kryogene Kühlflüssigkeit, zum Beispiel flüssiger Stickstoff, geschickt wird.

16. Leistungsinduktionseinrichtung nach Anspruch 15 bei Abhängigkeit von Anspruch 12 oder 14, **dadurch gekennzeichnet, daß** das oder jedes supraleitende Mittel helixförmig um sein zugeordnetes Innenrohr gewickeltes längliches supraleitendes Material umfaßt.

17. Leistungsinduktionseinrichtung nach Anspruch 16 bei Abhängigkeit von Anspruch 14, **dadurch gekennzeichnet, daß** die beiden Innenrohre an der Verbindung mechanisch miteinander verbunden sind, zum Beispiel geschweißt sind.

18. Leistungsinduktionseinrichtung nach einem der vorhergehenden Ansprüche, **dadurch gekennzeichnet, daß** die zweite elektrische Isolation (7) eine zweite Innenschicht aus halbleitendem Material, die elektrisch mit dem zweiten leitenden Mittel verbunden ist, eine zweite Außenschicht aus halbleitendem Material, die über ihre Länge hinweg mit einem gesteuerten elektrischen Potential, zum Beispiel Erdpotential, verbunden ist, und eine zweite Zwischenschicht aus massivem elektrisch isolierendem Material zwischen der halbleitenden zweiten Innenschicht und Außenschicht umfaßt.

19. Leistungsinduktionseinrichtung nach einem der vorhergehenden Ansprüche, **dadurch gekennzeichnet, daß** das halbleitende Material einen spezifischen elektrischen Widerstand von 1 bis 10⁵ Ohm-cm, bevorzugt von 10 bis 500 Ohm-cm und ganz besonders bevorzugt von 50 bis 100 Ohm-cm aufweist.

20. Leistungsinduktionseinrichtung nach einem der vorhergehenden Ansprüche, **dadurch gekennzeichnet, daß** die oder jede Zwischenschicht polymerisches Material umfaßt.

21. Leistungsinduktionseinrichtung nach einem der vorhergehenden Ansprüche, **dadurch gekennzeichnet, daß** die oder jede halbleitende Schicht aus polymerischem Material mit darin eingebetteten elektrisch gut leitenden Teilchen, zum Beispiel Ruß oder Metallteilchen, ausgebildet ist.

22. Leistungsinduktionseinrichtung nach Anspruch 20 oder 21, **dadurch gekennzeichnet, daß** das polymerische Material Polyethylen niedriger Dichte (PE-LD), Polythethylen hoher Dichte (PE-HD), Polypropylen (PP), vernetzte Materialien, zum Beispiel vernetztes Polyethylen (XLPE) oder Kautschukisolation, wie etwa Ethylenpropylen-Kautschuk (EPR) oder Siliziumkautschuk, umfaßt.

23. Leistungsinduktionseinrichtung nach einem der vorhergehenden Ansprüche, **dadurch gekennzeichnet, daß** sie für Hochspannung ausgelegt ist, zweckmäßigerweise über 10 kV, insbesondere über 36 kV und bevorzugt über 72,5 kV bis zu sehr hohen Übertragungsspannungen, wie etwa 400 kV bis 800 kV oder darüber.

24. Leistungsinduktionseinrichtung nach einem der vorhergehenden Ansprüche, **dadurch gekennzeichnet, daß** sie für einen Leistungsbereich über 0,5 MVA, bevorzugt über 30 MVA und bis zu 1000 MVA ausgelegt ist.

25. Verfahren, um in einer Leistungsinduktionseinrichtung folgendes miteinander zu verbinden: ein erstes Kabel (2) mit einem inneren ersten leitenden Mittel (3) und einer umgebenden äußeren ersten elektrischen Isolation (4), wobei das erste leitende Mittel ein erstes Leitermittel (22) enthält, und ein zweites Kabel (5) mit einem inneren zweiten leitenden Mittel (6) und einer umgebenden äußeren zweiten elektrischen Isolation (7), wobei bei dem Verfahren die elektrische Isolation von einem Endteil jedes Kabels (2, 5) entfernt wird, um das darunterliegende leitende Mittel (3, 6) freizulegen, die beiden Endteile des ersten und des zweiten leitenden Mittels (3, 6) miteinander verbunden werden, so daß die leitenden Mittel an einer Verbindung (8) Ende an Ende miteinander verbunden werden, und die Verbindung und die Endteile des inneren ersten und zweiten leitenden Mittels (3, 6) mit einem polymerischen elektrisch leitenden Mittel (9) umgeben werden, **dadurch gekennzeichnet, daß** das erste leitende Mittel weiterhin ein erstes Kühlmittel (21) zum Kühlen des ersten Leitermittels zur Verbesserung der elektrischen Leitfähigkeit des ersten Leitermittels (22) enthält und daß die erste elektrische Isolation (4) eine erste Innenschicht aus halbleitendem Material, die elektrisch mit dem ersten Leitermittel verbunden ist, eine erste Außenschicht aus halbleitendem Material, die über ihre Länge hinweg mit einem gesteuerten elektrischen Potential, zum Beispiel Erdpotential, verbunden ist, und eine erste Zwischenschicht aus massivem elektrisch isolierendem Material zwischen der halbleitenden ersten Innenschicht und Außenschicht enthält.

26. Verfahren nach Anspruch 25, **dadurch gekennzeichnet, daß** das polymerische elektrisch isolierende Mittel (9) als eine die Verbindung und die Endteile des ersten und des zweiten leitenden Mittels umgebende vorgefertigte Hülse aufgebracht wird.

27. Verfahren nach Anspruch 25, **dadurch gekennzeichnet, daß** das polymerische elektrisch isolierende Mittel (9) um die Verbindung und die Endteile des ersten und des zweiten leitenden Mittels herum extrudiert ist.

28. Verfahren nach Anspruch 25, **dadurch gekennzeichnet, daß** das polymerische elektrisch isolierende Mittel (9) als ein polymerisches Band um die Verbindung und die Endteile des ersten und des zweiten leitenden Mittels herum aufgebracht wird.

29. Verfahren nach Anspruch 28, **dadurch gekennzeichnet, daß** das polymerische Band vernetzt ist.

30. Verfahren nach Anspruch 28, **dadurch gekennzeichnet, daß** das polymerische Band ein Vernetzungsmittel enthält, daß durch die Aufbringung von Wärme und Druck nach dem Wickeln des Bands um die Verbindung und die Endteile des ersten und des zweiten leitenden Mittels herum vernetzt wird.

31. Verfahren nach einem der Ansprüche 25 bis 30, **dadurch gekennzeichnet, daß** das polymerische isolierende Mittel (9) eine Innenschicht aus halbleitendem Material aufweist.

32. Verfahren nach einem der Ansprüche 25 bis 31, **dadurch gekennzeichnet, daß** das polymerische isolierende Mittel (9) eine Außenschicht aus halbleitendem Material aufweist.

33. Verfahren nach einem der Ansprüche 25 bis 32, **dadurch gekennzeichnet, daß** das erste Leitermittel ein supraleitendes Mittel umfaßt.

34. Verfahren nach einem der Ansprüche 25 bis 33, **dadurch gekennzeichnet, daß** das zweite leitende Mittel ein zweites Leitermittel mit einem supraleitenden Mittel und ein zweites Kühlmittel zum Kühlen des zweiten Leitermittels auf supraleitende Temperaturen umfaßt.

35. Verfahren nach Anspruch 34 bei Abhängigkeit von Anspruch 33, **dadurch gekennzeichnet, daß** jedes Kühlmittel ein Innenrohr umfaßt, durch das bei Gebrauch kryogene Kühlflüssigkeit geschickt wird, daß jedes supraleitende Mittel helixförmig um sein zugeordnetes Innenrohr gewickeltes längliches supraleitendes Material umfaßt und daß die Innenrohre Ende an Ende miteinander verbunden sind.

36. Verfahren nach Anspruch 35, **dadurch gekennzeichnet, daß** die Innenrohre durch Schweißen Ende an Ende miteinander verbunden sind.

37. Verfahren nach Anspruch 35 oder 36, **dadurch gekennzeichnet, daß** die supraleitenden Materialien supraleitende Oxidmittel umfassen, die in einer metallischen Ummantelung, z.B. aus Silber oder Silberlegierung, ummantelt sind und daß die metallischen Ummantelungen z.B. durch Löten miteinander verbunden sind.

38. Verfahren nach einem der Ansprüche 25 bis 37, **dadurch gekennzeichnet, daß** die Leistungsinduktionseinrichtung für Hochspannung ausgelegt ist, zweckmäßigerweise über 10 kV, insbesondere über 36 kV und bevorzugt über 72,5 kV bis zu sehr hohen Übertragungsspannungen, wie etwa 400 kV bis 800 kV oder darüber.

39. Verfahren nach einem der Ansprüche 25 bis 38, **dadurch gekennzeichnet, daß** die Leistungsinduktionseinrichtung für einen Leistungsbereich über 0,5 MVA, bevorzugt über 30 MVA und bis zu 1000 MVA ausgelegt ist.

## Revendications

1. Dispositif à induction de puissance incluant au moins une jointure de câble (1) comprenant :
- un premier câble (2) ayant des premiers moyens internes de conduction (3) et un premier isolant électrique extérieur (4) les entourant, les premiers moyens de conduction (3) incluant des premiers moyens conducteurs (22) ;
- un deuxième câble (5) ayant des deuxièmes moyens internes de conduction (6) et un deuxième isolant électrique extérieur (7) les entourant ;
- une extrémité des premiers moyens de conduction (3) étant jointe au niveau d'une jointure (8) à une extrémité des deuxièmes moyens de conduction (6), ledit isolant électrique extérieur (4, 7) de chaque câble n'entourant pas une portion d'extrémité de ses moyens de conduction internes associés adjacente à ladite une extrémité de ces derniers ; et
- des moyens isolants électriques en polymère (9) entourant ladite jointure (8) et lesdites portions d'extrémité des premiers et des deuxièmes moyens de conduction (3, 6),
**caractérisé en ce que**
lesdits premiers moyens de conduction incluent en plus des premiers moyens de refroidissement (21) pour refroidir les premiers moyens conducteurs afin d'améliorer la conductivité électrique des premiers moyens conducteurs (22), et **en ce que** ledit premier isolant électrique (4) comprend une première couche intérieure en matériau semiconducteur reliée électriquement aux premiers moyens conducteurs, une première couche extérieure de matériau semiconducteur reliée à un potentiel électrique commandé, par exemple le potentiel de la terre, sur sa longueur, et une première couche intermédiaire de matériau isolant électrique solide entre lesdites premières couches intérieure et extérieure semiconductrices.

2. Dispositif à induction de puissance selon la revendication 1, **caractérisé en ce que** lesdits moyens isolants électriques en polymère (9) entourent ladite jointure (8) et lesdites portions d'extrémité des premiers et deuxièmes moyens de conduction (3, 6) sans qu'aucune isolation thermique n'intervienne.

3. Dispositif à induction de puissance selon la revendication 1 ou 2, **caractérisé en ce que** lesdits moyens isolants électriques en polymère (9) comprennent une gaine préfabriquée en polymère.

4. Dispositif à induction de puissance selon la revendication 1 ou 2, **caractérisé en ce que** lesdits moyens isolants électriques en polymère (9) comprennent une extrusion en polymère extrudée autour de la jointure (8).

5. Dispositif à induction de puissance selon la revendication 1 ou 2, **caractérisé en ce que** lesdits moyens isolants électriques en polymère (9) comprennent un ruban en polymère enroulé autour de la jointure.

6. Dispositif à induction de puissance selon la revendication 5, **caractérisé en ce que** ledit ruban en polymère est réticulé.

7. Dispositif à induction de puissance selon l'une quelconque des revendications précédentes, **caractérisé en ce qu'**une couche de matériau semiconducteur se trouve à l'intérieur desdits moyens d'isolation en polymère (9).

8. Dispositif à induction de puissance selon l'une quelconque des revendications précédentes, **caractérisé en ce qu'**une couche de matériau semiconducteur se trouve à l'extérieur desdits moyens d'isolation en polymère (9).

9. Dispositif à induction de puissance selon l'une quelconque des revendications précédentes, **caractérisé en ce que** les moyens isolants électriques en polymère comprennent du polyéthylène à basse ou à haute densité (LDPE ou HDPE), du polybutylène (PB), du polyméthylpentène (PMP), du polymère acrylate d'éthylène (éthyle), des matériaux réticulés ou un isolant en caoutchouc.

10. Dispositif à induction de puissance selon la revendication 9, **caractérisé en ce que** lesdits matériaux réticulés comprennent du polyéthylène réticulé (XLPE).

11. Dispositif à induction de puissance selon la revendication 9, **caractérisé en ce que** ledit isolant en caoutchouc comprend du caoutchouc au propylène éthylène (EPR) ou du caoutchouc au silicone.

12. Dispositif à induction de puissance selon l'une quelconque des revendications précédentes, **caractérisé en ce que** les premiers moyens conducteurs comprennent des premiers moyens supraconducteurs et les premiers moyens de refroidissement, en utilisation, refroidissent les premiers moyens supraconducteurs aux températures de supraconduction.

13. Dispositif à induction de puissance selon l'une quelconque des revendications précédentes, **caractérisé en ce que** les deuxièmes moyens de conduction comprennent des deuxièmes moyens conducteurs et des deuxièmes moyens de refroidissement pour refroidir les deuxièmes moyens conducteurs afin d'améliorer la conductivité électrique des deuxièmes moyens conducteurs.

14. Dispositif à induction de puissance selon la revendication 13, **caractérisé en ce que** les deuxièmes moyens conducteurs comprennent des deuxièmes moyens supraconducteurs et les deuxièmes moyens de refroidissement, en utilisation, refroidissent les deuxièmes moyens supraconducteurs aux températures de supraconduction.

15. Dispositif à induction de puissance selon l'une quelconque des revendications précédentes, **caractérisé en ce que** lesdits moyens de refroidissement comprennent un tube interne à travers lequel circule un liquide de refroidissement cryogénique, par exemple de l'azote liquide.

16. Dispositif à induction de puissance selon la revendication 15 lorsqu'elle dépend de la revendication 12 ou 14, **caractérisé en ce que** lesdits moyens supraconducteurs comprennent un matériau supraconducteur allongé enroulé à la manière d'une spirale autour de son tube interne associé.

17. Dispositif à induction de puissance selon la revendication 16 lorsqu'elle dépend de la revendication 14, **caractérisé en ce que** les deux tubes internes sont joints mécaniquement, par exemple soudés, au niveau de la jointure.

18. Dispositif à induction de puissance selon l'une quelconque des revendications précédentes, **caractérisé en ce que** le deuxième isolant électrique (7) comprend une deuxième couche intérieure de matériau semiconducteur reliée électriquement aux deuxièmes moyens de conduction, une deuxième couche extérieure de matériau semiconducteur reliée à un potentiel électrique commandé, par exemple le potentiel de la terre, sur sa longueur, et une deuxième couche intermédiaire de matériau isolant électrique solide entre lesdites deuxièmes couches intérieure et extérieure semiconductrices.

19. Dispositif à induction de puissance selon l'une quelconque des revendications précédentes, **caractérisé en ce que** ledit matériau semiconducteur a une résistivité comprise entre 1 et 10⁵ ohms-cm, de préférence entre 10 et 500 ohms-cm, et encore de préférence entre 50 et 100 ohms-cm.

20. Dispositif à induction de puissance selon l'une quelconque des revendications précédentes, **caractérisé en ce que** ladite ou chacune desdites couches intermédiaires comprend un matériau polymère.

21. Dispositif à induction de puissance selon l'une quelconque des revendications précédentes, **caractérisé en ce que** ladite ou chacune desdites couches semiconductrices est formée de matériau polymère avec des particules fortement conductrices d'électricité, par exemple des particules de noir de carbone ou métalliques, qui y sont hayées.

22. Dispositif à induction de puissance selon la revendication 20 ou 21, **caractérisé en ce que** ledit matériau polymère comprend du polyéthylène à basse densité (LDPE), du polyéthylène à haute densité (HDPE), du polypropylène (PP), des matériaux réticulés, par exemple du polyéthylène réticulé (XLPE), ou un isolant en caoutchouc tel que le caoutchouc au propylène éthylène (EPR) ou le caoutchouc au silicone.

23. Dispositif à induction de puissance selon l'une quelconque des revendications précédentes, **caractérisé en ce qu'**il est conçu pour la haute tension, convenablement supérieure à 10 kV, notamment supérieure à 36 kV, et de préférence supérieure à 72,5 kV jusqu'à des tensions de transport très élevées telles que 400 kV à 800 kV ou supérieures.

24. Dispositif à induction de puissance selon l'une quelconque des revendications précédentes, **caractérisé en ce qu'**il est conçu pour une gamme de puissances supérieures à 0,5 MVA, de préférence supérieures à 30 MVA et jusqu'à 1000 MVA.

25. Méthode pour joindre ensemble dans un dispositif à induction de puissance un premier câble (2) ayant des premiers moyens internes de conduction (3) et un premier isolant électrique extérieur (4) les entourant, les premiers moyens de conduction (3) incluant des premiers moyens conducteurs (22), et un deuxième câble (5) ayant des deuxièmes moyens internes de conduction (6) et un deuxième isolant électrique extérieur (7) les entourant, la méthode comprenant l'enlèvement de l'isolant électrique d'une portion d'extrémité de chaque câble (2, 5) pour révéler les moyens de conduction qu'il dissimule (3, 6), la jonction desdites portions d'extrémité desdits premiers et deuxièmes moyens de conduction (3, 6) de manière à ce que les moyens de conduction soient joints ensemble bout à bout en une jointure (8), et l'entourage de la jointure et desdites portions d'extrémité des premiers et moyens deuxièmes de conduction interues (3, 6) avec des moyens isolants électriques en polymère (9), **caractérisé en ce que** lesdits premiers moyens de conduction incluent en plus des premiers moyens de refroidissement (21) pour refroidir les. premiers moyens conducteurs afin d'améliorer la conductivité électrique des premiers moyens conducteurs (22), et **en ce que** ledit premier isolant électrique (4) comprend une première couche intérieure en matériau semiconducteur reliée électriquement aux premiers moyens conducteurs, une première couche extérieure de matériau semiconducteur reliée à un potentiel électrique commandé, par exemple le potentiel de la terre, sur sa longueur, et une première couche intermédiaire de matériau isolant électrique solide entre lesdites premières couches intérieure et extérieure semiconductrices.

26. Méthode selon la revendication 25, **caractérisée en ce que** lesdits moyens isolants électriques en polymère (9) sont appliqués sous la forme d'une gaine préfabriquée qui entoure la jointure et lesdites portions d'extrémité des premiers et deuxièmes moyens de conduction.

27. Méthode selon la revendication 25, **caractérisée en ce que** lesdits moyens isolants électriques en polymère (9) sont extrudés autour de la jointure et lesdites portions d'extrémité des premiers et deuxièmes moyens de conduction.

28. Méthode selon la revendication 25, **caractérisée en ce que** lesdits moyens isolants électriques en polymère (9) sont appliqués sous la forme d'un ruban en polymère autour de la jointure et lesdites portions d'extrémité des premiers et deuxièmes moyens de conduction.

29. Méthode selon la revendication 28, **caractérisée en ce que** le ruban en polymère est réticulé.

30. Méthode selon la revendication 28, **caractérisée en ce que** le ruban en polymère contient un agent réticulant qui est réticulé par l'application de chaleur et de pression après l'enroulement du ruban autour de la jointure et desdites portions d'extrémité des premiers et deuxièmes moyens de conduction.

31. Méthode selon l'une quelconque des revendications 25 à 30, **caractérisée en ce que** lesdits moyens isolants électriques en polymère (9) comprennent une couche intérieure de matériau semiconducteur.

32. Méthode selon l'une quelconque des revendications 25 à 31, **caractérisée en ce que** lesdits moyens isolants électriques en polymère (9) comprennent une couche extérieure de matériau semiconducteur.

33. Méthode selon l'une quelconque des revendications 25 à 32, **caractérisée en ce que** lesdits premiers moyens conducteurs comprennent des moyens supraconducteurs.

34. Méthode selon l'une quelconque des revendications 25 à 33, **caractérisée en ce que** lesdits deuxièmes moyens de conduction comprennent des deuxièmes moyens conducteurs comprenant des moyens supraconducteurs et des deuxièmes moyens de refroidissement pour refroidir les deuxièmes moyens conducteurs à la température de supraconduction.

35. Méthode selon la revendication 34 lorsqu'elle dépend de la revendication 33, **caractérisée en ce que** chaque moyen de refroidissement comprend un tube interne à travers lequel, en utilisation, circule un liquide de refroidissement cryogénique, **en ce que** chaque moyen supraconducteur comprend un matériau supraconducteur allongé enroulé à la manière d'une spirale autour de son tube interne associé, et **en ce que** lesdits tubes internes sont joints ensemble bout à bout.

36. Méthode selon la revendication 35, **caractérisée en ce que** lesdits tubes internes sont joints ensemble bout à bout par soudage.

37. Méthode selon la revendication 35 ou 36, **caractérisée en ce que** lesdits matériaux supraconducteurs comprennent des moyens supraconducteurs à oxyde revêtus d'une enveloppe métallique, par exemple de l'argent ou un alliage d'argent, et **en ce que** les enveloppes métalliques sont liées ensemble, par exemple par brasage.

38. Méthode selon l'une quelconque des revendications 25 à 37, **caractérisée en ce que** le dispositif à induction de puissance est conçu pour la haute tension, convenablement supérieure à 10 kV, notamment supérieure à 36 kV, et de préférence supérieure à 72,5 kV jusqu'à des tensions de transport très élevées telles que 400 kV à 800 kV ou supérieures.

39. Méthode selon l'une quelconque des revendications 25 à 38, **caractérisée en ce que** le dispositif à induction de puissance est conçu pour une gamme de puissances supérieures à 0,5 MVA, de préférence supérieures à 30 MVA et jusqu'à 1000 MVA.
